(19) **Europäisches Patentamt**

**European Patent Office**

**Office européen des brevets**

(11) Publication number: **0 073 648**

**B1**

(12) **EUROPEAN PATENT SPECIFICATION**

(45) Date of publication of patent specification: **11.05.88**

(51) Int. Cl.⁴: **B 29 C 67/14**

(21) Application number: **82304486.2**

(22) Date of filing: **25.08.82**

(54) **Fiber material for reinforcing plastics.**

(30) Priority: **31.08.81 JP 136301/81**

(43) Date of publication of application:
**09.03.83 Bulletin 83/10**

(45) Publication of the grant of the patent:
**11.05.88 Bulletin 88/19**

(84) Designated Contracting States:
**DE FR GB NL**

(56) References cited:
**DE-A-2 032 423**
**FR-A-2 315 562**
**GB-A- 542 379**
**US-A-3 769 142**
**US-A-4 071 647**

(73) Proprietor: **TORAY INDUSTRIES, INC.**
**2, Nihonbashi-Muromachi 2-chome Chuo-ku**
**Tokyo 103 (JP)**

(72) Inventor: **Nishimura, Akira**
**15-B2-24, Sonoyama 2-chome**
**Otsu-shi Shiga-ken (JP)**
Inventor: **Maeda, Kunio**
**74-61, Nakakomori-cho**
**Omihachiman-shi Shiga-ken (JP)**
Inventor: **Kito, Kazuo**
**16-A1-44 Takehanajizojiminami-machi**
**Yamashina-ku**
**Kyoto-shi Kyoto-fu (JP)**

(74) Representative: **Miller, Joseph et al**
**J. MILLER & CO. Lincoln House 296-302 High Holborn**
**London WC1V 7JH (GB)**

Courier Press, Leamington Spa, England.

## Description

This invention relates to a fibre material which may be used in fibre reinforced plastics (hereinafter referred to as FRP). Although not so restricted, this invention relates more particularly to a laminated reinforcing fibre material suitable for use in relatively large FRP.

In the case of fibre substrates such as, for example, those of woven fabric or its prepreg, which are used as reinforcing fibre materials for FRP, substrates of adequate thickness cannot be obtained. Accordingly, they are usually used in the form of a laminate consisting of a plurality of fibre substrates.

However, when such a laminate is heated under pressure to form a FRP, since there is nothing to restrain the fibre substrates from moving relative to each other, the fibre substrates or the reinforcing fibres are pushed aside by a resin flow, and the arrangement of the reinforcing fibres are disturbed. This disturbance in arrangement tends to increase, particularly, in the case where unidirectional prepregs are employed in which the bond between the reinforcing fibres is performed by resin only or in the case where a resin injection moulding process consisting of a resin intrusion is adopted for a material having a relatively strong texture, such as a woven fabric.

On the other hand, when a quasi-isotropic FRP is desired, fibre substrates are laminated so that, for example, directions of their reinforcing fibres cross at an angle of 0, ±45 or 90°. When this is done, since the reinforcing fibres and the resin have markedly different coefficients of linear thermal expansion, residual stresses due to the difference in thermal strain arise between the layers. Furthermore, since the Poisson's ratio of an FRP is dependent upon the direction of the arrangement of the reinforcing fibres and has a great anisotropy within the surface, the difference in Poisson's ratio between the layers, when crosslaminated, becomes considerable. Accordingly, when the FRP is subjected to stress, stresses due to the above-mentioned thermal strain difference or Poisson's strain difference, in addition to an external force, are exerted in a complicated manner, delamination by resin rupture between layers occurs before the reinforcing fibres are broken. In particular, when high elongation carbon fibres (fibres having an elongation of about 1.7—2.2%) are used as reinforcing fibres, the above-mentioned disadvantages become marked, because there is a great thermal strain difference due to a marked difference between their coefficients of linear thermal expansion (the coefficient of linear thermal expansion of carbon fibre is $-(0.7-1.2) \times 10^{-6}/°C$ and that of resin is about $(55-100) \times 10^{-6}/°C$), and because there is a greater difference in Poisson's strain due to its high elongation. Furthermore, the more fibre substrates a laminate has, that is, in the case of a thicker FRP having more resin layers between fibre substrates, the more marked the above-mentioned problem becomes, causing a decrease in reliability of the FRP. Moreover, once a crack arises between layers, it propagates on stretching of the material because there is nothing to prevent the propagation.

In FR—A—2,315,562 and in DE—A—2,032,423 there is disclosed a fibre material for reinforcing plastics comprising at least one first fibre substrate and at least one second fibre substrate which are laminated in the same longitudinal direction and which are integrated by stitch yarns passing repeatedly through the substrates in the direction of lamination of the substrates.

In the prior art, however, the fibre substrates are composed of unidirectional fibres and are not woven fabrics and thus will not impart quasi-isotropic properties to an FRP. Moreover, in the prior art there is no suggestion that the stitch yarns should have a larger elongation at break than reinforcing fibres of the said substrate, so that bending of the prior art structures was liable to result in breakage of the stitch yarns.

According, therefore, to the present invention, there is provided a fibre material for reinforcing plastics comprising at least one first fibre substrate and at least one second fibre substrate which are laminated in the same longitudinal direction and which are integrated by stitch yarns passing repeatedly through the substrates in the direction of lamination of the substrates, characterised in that the or each first fibre substrate has reinforcing fibres in two sets which extend in respectively the longitudinal direction and the transverse direction, the first reinforcing fibres intersecting each other at substantially right angles, and the or each second fibre substrate has second reinforcing fibres in two further sets which extend in two directions having angles of ±(25—65) degrees relative to the longitudinal direction, the first and second fibre substrates being woven fabrics, and the stitch yarns having a larger elongation at break than the first and second reinforcing fibres.

Preferably, the woven fabrics have a weave selected from the group consisting of a noncrimp fibrous structure, a plain weave, a twill weave, and a satin weave.

Each woven fabric may be impregnated with an uncured resin to form a prepreg.

The reinforcing fibres may be multifilament yarns of a fibre selected from the group consisting of carbon fibre, glass fibre, polyaramide fibre, silicon carbide fibre and metal fibre.

The stitch yarns may be selected from the group consisting of multifilament yarns of carbon fibre, glass fibre, polyaramide fibre, silicon carbide fibre and metal fibre.

The stitch yarns may have a thermal shrinkage at 120°C of not more than 2%.

The stitch yarns may have a thermal shrinkage at 180°C of not more than 1%.

The stitch yarns may have a cross-sectional area of 0.01 to 0.25 mm$^2$.

The stitch yarns may be composed of multifilament yarns having a twist number of 30 to 70 T/m.

The first and second fibre substrates (and a third fibre substrate where so provided), each in the form of a set consisting of one to several substrates, may be laminated alternately with each other.

The number of laminations of the fibre substrates may vary along the longitudinal direction or along the transverse direction of the fibre material. The number of laminations of the fibre substrates may also differ between two directions including the longitudinal direction and the transverse direction.

Integration by the stitch yarns may be performed along the longitudinal direction of the fibre material or over the entire surface of the fibre material.

The integration by the stitch yarns may be performed only on part of the surface of the fibre material, and the fibre substrates on an unintegrated portion can diverge in the direction of lamination.

The integration by the stitch yarns may be performed by single chain stitching in which only a single yarn engages with itself to form loops.

Moreover, the integration by the stitch yarns may be performed by lock stitching in which two yarns engage with each other.

The weave slide resistance of the woven fabric may range from 40 to 600 g/cm.

The yarn slippage resistance of the woven fabric may be 100 to 500 g/cm.

In the case in which the woven fabric is impregnated with an uncured resin to form a prepreg, the resin may be selected from the group consisting of an unsaturated polyester resin, an epoxy resin, a phenol resin and a polyimide resin. The resin may be 35 to 60% by volume fraction. Preferably, however, the resin is 40 to 55% by volume fraction.

If the reinforcing fibres are multifilament yarns of a fibre selected from the group consisting of carbon fibre, glass fibre, polyaramide fibre, silicon carbide fibre and metal fibre, the reinforcing fibres desirably have substantially no twist.

The direction of the stitch yarns may have an angle of −15 to 15 degrees relative to the direction of lamination of the fibre substrates. This angle is preferably −5 to 5 degrees relative to the direction of lamination of the fibre substrates.

The direction of the stitch yarns may have an angle of substantially zero degree relative to the direction of lamination of the fibre substrates.

The stitch length of the stitch yarns and the interval between adjacent stitch yarns may be 2 to 30 mm.

The passing length of stitch yarns may be 0.9 to 1.1 times the thickness of a fibre reinforced plastic molding.

The passing length of the stitch yarns may in this case be substantially the same as the thickness of a fibre reinforced plastics molding.

The stitch density of the stitch yarns may be varied within the surface.

The invention is illustrated, merely by way of example, in the accompanying drawings, in which:—

Figure 1 is a plan view illustrating a reinforcing fibre material according to an embodiment of this invention, part of the top layer of which is cut away,

Figure 2 is a perspective view illustrating the same material, wherein its side is taken as the cross-section,

Figures 3 and 4 are each a plan view illustrating an embodiment showing a manner of application of stitch yarns,

Figure 5 is a perspective view illustrating a reinforcing fibre material according to another embodiment, part of which is cut away,

Figure 6 is a perspective view illustrating a reinforcing fibre material according to still another embodiment,

Figure 7 is a perspective view illustrating a reinforcing fibre material according to still another embodiment,

Figure 8 is a perspective view illustrating a reinforcing fibre material of this invention formed for a I-beam,

Figures 9A to 9I are each a perspective view illustrating an embodiment of a beam moulded from a reinforcing fibre material according to this invention,

Figures 10A and 10B are plan views each illustrating a test piece for measuring the resistance of yarn slippage of a woven fabric; and

Figure 11 is a graph illustrating a comparison of resistance to delamination of FRP moulded from a reinforcing fibre material according to this invention and FRP outside this invention.

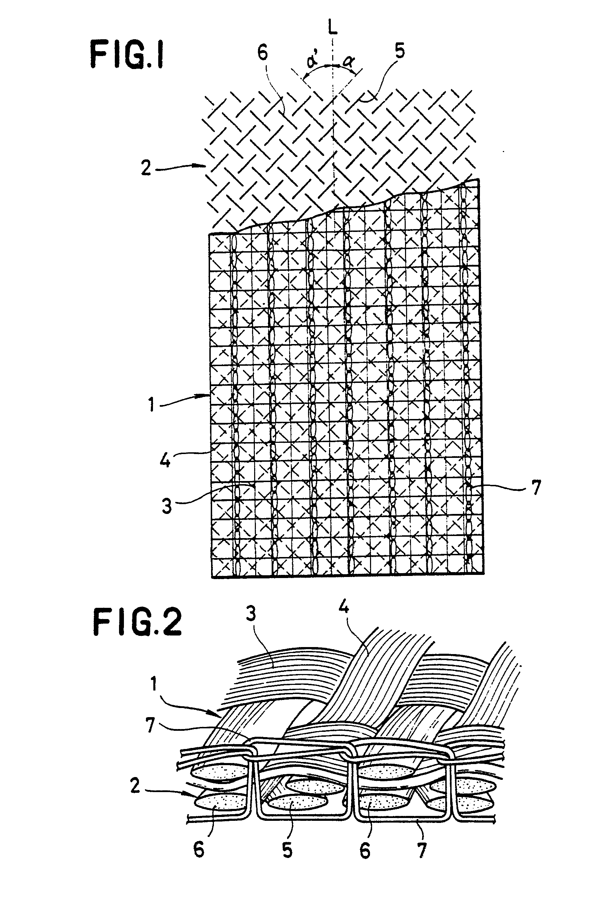

In Figures 1 and 2, there is shown a fibre material according to the present invention for reinforcing plastics comprising a first fibre substrate 1 on the top consisting of a woven fabric and a second fibre substrate 2 on the back consisting of woven fabric. Of these substrates, the first fibre substrate 1 on the top is composed of a plain weave of longitudinal reinforcing fibres 3 and transverse reinforcing fibres 4 intersecting therewith, and the second fibre substrate 2 on the back is composed of a plain weave of reinforcing fibres 5 and 6 intersecting with each other in bias directions each having an angle of a or a′ relative to the longitudinal direction L of the fabric. The angles a and a′ of the reinforcing fibres 5 and 6 of the second fibre substrate 2 can be varied within the ranges: 25 to 65 degrees and −25 to −65 degrees, respectively, but it is generally preferred that a=45 degrees and a′=−45 degrees.

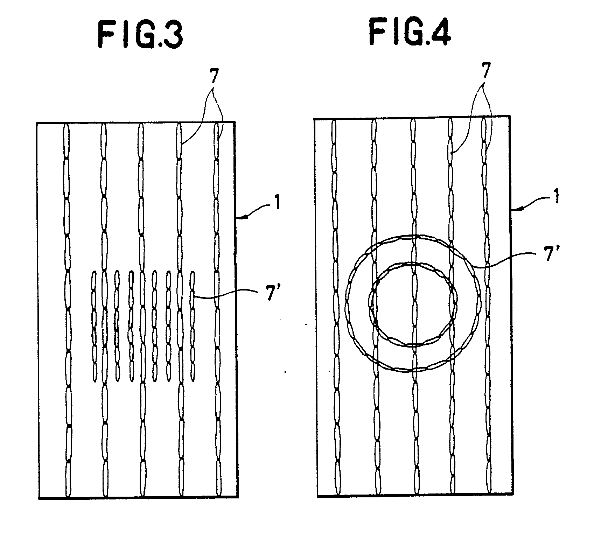

With the two fibre substrates 1 and 2 laminated as above are engaged stitch yarns 7 at an equal pitch along the longitudinal direction of the fibre substrates. While the stitch yarns 7 are passing repeatedly from the top to the back and then from the back to the top of the two fibre substrates 1, 2, the stitch yarns 7 integrate the fibre substrates 1 and 2 on both sides. A plurality of stitch yarns 7 are provided at intervals substantially equidistant in the lateral direction so that the fibre substrates 1 and 2 are integrated over the entire surface. The positions of the stitch yarns 7 relative to the reinforcing fibres 3 and 4, and 5 and 6 of the fibre substrates 1 and 2 are not necessarily regular but can be random. Furthermore, as shown in Figure 3 and Figure 4, it is also possible to apply additional stitch yarns 7' particularly to areas for which further reinforcement of integration is necessary.

The reinforcing fibre material of the above structure can give quasi-isotropic physical properties to a FRP in the direction within its surface, because the first fibre substrate 1 has reinforcing fibres 3 and 4 in the longitudinal direction and in the transverse direction intersecting it at right angles and the second fibre substrate 2 has reinforcing fibres 5 and 6 in bias directions relative to the above directions.

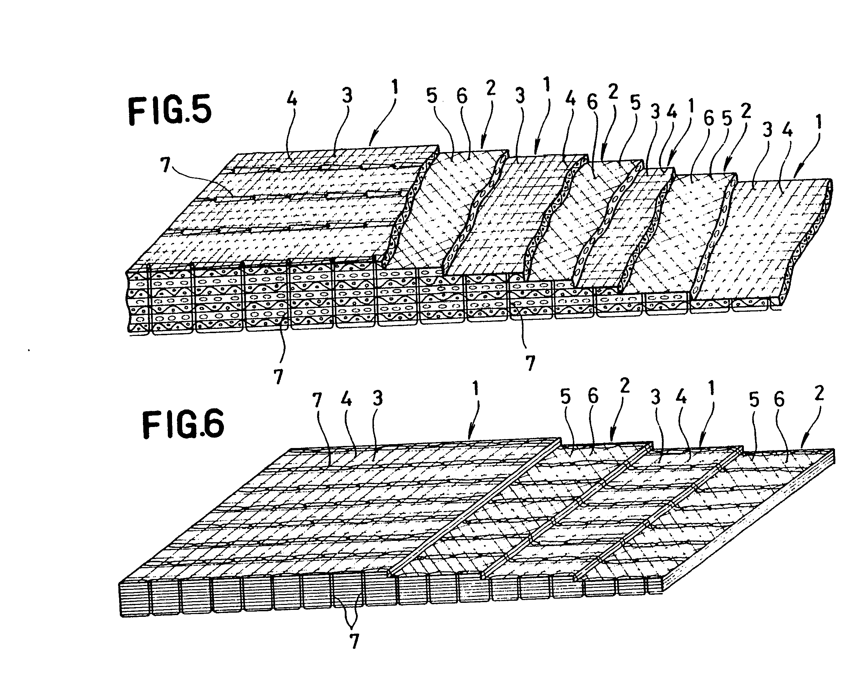

An example shown in Figure 5 is a reinforcing fibre material wherein the number of laminations of the above-mentioned first and second fibre substrates 1 and 2 are increased. In this fibre material, a first fibre substrate 1 having longitudinal and transverse reinforcing fibres 3 and 4 and a second fibre substrate 2 having reinforcing fibres 5 and 6 in the bias directions are laminated alternately one by one to form seven layers and these layers are integrated by stitch yarns 7 passing upwardly and downwardly through the layers.

Also in this case, quasi-isotropy can be obtained by lamination of the first fibre substrate 1 and the second fibre substrate 2 and, moreover, a still thicker reinforcing fibre material can be obtained. In this case, the first fibre substrate 1 and the second fibre substrate 2 can be laminated alternately one by one as in the embodiment of Figure 5, but the first and second substrates can be laminated alternately so as to form groups consisting of one to several substrates. Further, as shown in Figure 6, a structure can be provided in which the laminated substrates 1 and 2 are caused to slide in the longitudinal direction so that the laminate has a varied thickness.

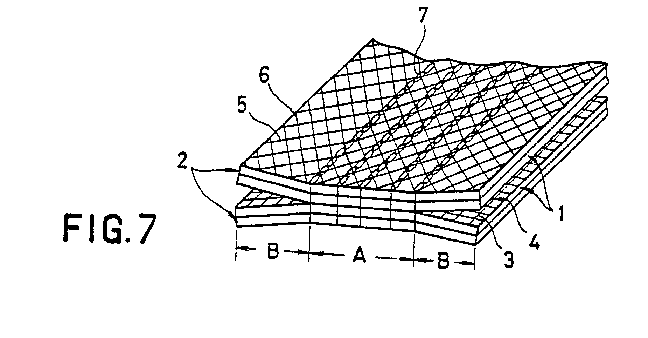

In the reinforcing fibre material shown in Figure 7, a pair of first fibre substrates 1 having the above-mentioned reinforcing fibres 3 and 4 is arranged inside, a pair of second fibre substrates 2 having the reinforcing fibres 5 and 6 is arranged outside, and these substrates are integrated by stitch yarns 7. Here, binding by the stitch yarns 7 is performed so that the four layers are integrated only in the central region and in both side regions B, B, the four layers are separated at an intermediate layer. However, the two adjacent first and second fibre materials 1 and 2 may be integrated in both side regions B, B. This structure is advantageous for moulding the FRP beams hereinafter described.

The reinforcing fibre material shown in each of the above-mentioned embodiments can either be in the form of a prepreg prepared by preimpregnation with an uncured resin or can be in the form in which it is not impregnated with a resin. In the latter case, at the time of moulding into an FRP a resin is intruded into a metal mould while the fibre material is charged into the mould.

In the above-mentioned embodiments, the fibre substrates 1 and 2 may have a plain weave. However, other weaves such as a satin weave and a twill weave can also be used. Furthermore, a so-called non-crimp fibrous structure prepared by integrating, by auxiliary fibres, two yarn groups prepared by gathering bend-free straight reinforcing fibres in parallel to one another in a form resembling a sheet, as disclosed in US—A—4,320,160, is preferred because the reinforcing fibres do not have bends on which a stress is concentrated, its characteristic property can be fully exhibited and the mechanical strength and breaking strength of the FRP can become still higher.

Futhermore, a satin weave is preferred because it is possible to obtain a thicker woven fabric substrate (per sheet) as compared with other weaves, the resistance of yarn slippage is relatively small and, during needling the stitch yarns by a needle, the reinforcing fibres of the fibre substrates are hardly damaged. Furthermore, with respect to the second fibre substrate 2 in which the reinforcing fibres are at a bias, the weave slide arising when a tension is applied in the prepreg step or the moulding step can be prevented by previous passing of the stitch yarns along the longitudinal direction. Accordingly, a satin weave is suitable to produce fibre reinforced plastics having uniform physical properties.

As the reinforcing fibres which are used in this invention, there are preferably used multifilament yarns such as those of carbon fibre, glass fibre, polyaramide fibre, silicon carbide fibre or metal fibre. Of these, carbon fibre is the most suitable. This carbon fibre includes, needless to say, a so-called graphite fibre having a graphitized structure.

Thus the reinforcing fibres may include glass fibres, polyaramide fibres, and silicon carbide fibres, alone or in a combination of at least two types. It is most suitable that the twist number to be given to reinforcing fibres used as multifilament yarns is substantially zero and at most 20 T/m. When the twist number becomes too large, the resin impregnation during the production of FRP becomes poor and it is difficult to heighten the volume content of the fibre as a composite material. Furthermore, when reinforcing fibres for stitching are passed through by a needle, the reinforcing fibres are readily broken by the needle. This tendency becomes marked particularly in the case of carbon fibre which has an extremely high modulus of elasticity and a low elongation at break and is brittle to bend.

It is preferred that the carbon fibre which may be used in this invention has an elongation at break of 1 to 2.2%, and particularly, 1.7 to 2.2% as measured by a method specified in JIS C 7601. Moreover, it is preferred that the monofilament diameter is 4 to 12 μ. It is also preferred that the carbon fibre which may be used as reinforcing fibres has a cross-sectional area of 0.07 to 3.5 mm². If the cross-sectional area of reinforcing fibres is smaller than 0.07 mm², only a thin fibre substrate can be obtained. Accordingly, to obtain fibre material having a considerable thickness, lamination of more fibre substrates is necessary and if this is done, the FRP will have more interlayer parts, that is, weak points. Moreover, such lamination is not preferred from the viewpoint of production, because the number of lamination steps increases. On the contrary, when the cross-sectional area is larger than 3.5 mm², it becomes difficult to infiltrate the resin uniformly into the interior because of excessive thickness. Furthermore, since the substrates are woven fabrics, bend by crossing among the reinforcing fibres will, other things being equal, become excessively large, concentrating a stress on this bend portion, and accordingly it becomes impossible to fully utilize the characteristic properties of the reinforcing fibres.

It is therefore arranged that the stitch yarns 7 have an elongation at break larger than those of the reinforcing fibres 3, 4, 5 and 6. That is, as mentioned below, because the stitch yarns 7 have large bends at the upper and lower surfaces of the fibre materials, an extreme stress concentration occurs to the stitch yarns 7 when a stress is given to the FRP. Accordingly, it becomes possible to prevent breaks at the stitch yarns by selecting an elongation at break of the stitch yarns which is larger than those of the reinforcing fibres.

The stitch yarns are preferably selected from the group consisting of multifilament yarns of carbon fibre, glass fibre, polyamide fibre, silicon carbide fibre and metal fibre. If the reinforcing fibres are carbon fibres, the stitch yarns are preferably selected from the group consisting of glass fibre and polyaramide fibre. The monofilament diameter of glass fibre used as a fibre is preferably 3 to 7 μ and that of polyaramide fibre is preferably 5 to 20 μ.

To prevent delamination by stitch yarns effectively, it is preferred to pass the stitch yarns through a plurality of laminated substrates at an angle substantially perpendicular to the surface of the fibre substrates. Also in the case where the stitch yarns are biased relative to the perpendicular of the surface of the fibre substrates, it is preferred that the bias angle is in the range: −15 to 15 degrees, and preferably, −5 to 5 degrees with respect to its perpendicular. Generally, FRP has the characteristic that it exhibits a high strength along its fibre axis direction but the strength decreases sharply as the angle to the fibre axis direction becomes larger. That is, it is preferred for the effective prevention of delamination that the stitch yarns are passed through in the state where the yarns exhibit their highest strength. When the stitch yarns are passed through at an angle outside the above critical angle, more stitch yarns are required to prevent the delamination. This is not desirable because the possibility of the fibre substrates being damaged by a needle is increased.

It is preferred that these stitch yarns have the characteristics that the yarns have a thermal shrinkage at 120°C of not higher than 2% and, preferably, a thermal shrinkage at 180°C of not higher than 1%. This is because, as mentioned above, the function of the stitch yarns is to prevent delamination of the fibre substrates, and when heat is applied, for example, during the drying step of prepreg production, a stress arises from an extreme thermal shrinkage of the stitch yarns and a break at the stitched portion is liable to occur.

With respect to the thickness of the stitch yarns, it is preferred that the cross-sectional area is 0.01 to 0.25 mm². When the thickness is too large, the stitch yarns protrude beyond both surfaces of the laminated fibre substrates and when moulded into an FRP, it is impossible to heighten the volume fraction of the reinforcing fibre. On the contrary, when the thickness is inadequate, more stitch yarns are required to prevent the delamination and acordingly the number of needle passages is increased and the possibility of fibre damage is increased, particularly when carbon fibres are used as the reinforcing fibres.

It is preferred that the stitch yarns are composed of multifilament yarns and that in this case the reinforcing fibres have the lowest possible twist number, preferably, a twist number of 30 to 70 T/m in order to heighten the volume fraction of the reinforcing fibres in the production of FRP. Moreover, with respect to seaming with the stitch yarns, single chain stitching can be used in which only one yarn entangles with itself to form loops or lock stitching and in which two yarns, i.e. an upper yarn and a lower yarn, entangle with each other. Preferably, single chain stitching is used.

It is preferred that both the stitch length of stitch yarns and the interval between adjacent stitch yarns are 2 to 30 mm. When the stitch length and the stitch interval are smaller than 2 mm, the number of stitches, i.e. the number of needle passages necessary to pass the stitch yarns, increases and the possibility of the reinforcing fibres being damaged increases unfavourably. When they exceed 30 mm, the stitch density becomes too large to obtain a sufficient stitch effect.

With respect to the passing length of the stitch yarns, it is preferred to be 0.9 to 1.1 times the thickness of an FRP moulding and more suitably substantially equal to it. When the passing length of the stitch yarns is smaller than 0.9 times the thickness of an FRP moulding, the fibre substrates are fastened too strongly and infiltration of resin into the substrates, the reinforcing fibres and the monofilaments becomes difficult. Furthermore, when moulding is performed by a mould, a spindle-shaped clearance is formed between the stitched portion and the inner surface on the mould, and this clearance is filled with resin. On the other hand, when the passing length is longer than 1.1 times, an excesive yarn length corresponding to the passing length of the stitch yarn minus the thickness of the FRP moulding becomes too long, and the stitch yarns are bent in the direction of the thickness of the fibre material and the stitch effect becomes difficult to obtain.

With respect to the resin for the impregnation of the reinforcing fibre material, it is preferably a resin selected from the group consisting of an unsaturated polyester resin, an epoxy resin, a phenol resin and a polyimide resin, for both impregnation to prepare prepregs and intrusion of resin during moulding into a metal mould.

The resin content based on the reinforcing fibre material is preferably 35 to 60% by volume. When the resin content is lower than 35% by volume in the moulding of FRP, the amount of resin is not sufficient to fill the geometrical space confined by the fibre substrates and the reinforcing fibres, voids increase, bondability between the fibre substrates and the reinforcing fibres decrease and the FRP properties, particularly tensile strength and shear strength, deteriorate. On the contrary, when the resin content is higher than 60% by volume, the content of reinforcing fibres becomes too low. Since characteristic properties of FRP, such as strength and elastic modulus, vary in approximate proportion to the content of the reinforcing fibres, with a resin content exceeding 60% by volume, the above characteristic properties deteriorate because of an extremely low content of the reinforcing fibres. A preferable content of resin is 40 to 55% by volume.

A problem which can occur when the reinforcing fibres consist of carbon fibre is that it is weak to bend and is brittle. Owing to these characteristic properties, partial breakage of carbon fibres is liable to occur when the stitch yarns are passed through by a needle. The partial breakage of carbon fibres, when the fibres are made into a composite material, inevitably results in a decrease in strength of the resulting FRP. In order to make stitching by stitch yarns possible by eliminating the partial breakage of carbon fibres, it is preferred that the fibre substrate composed of carbon fibres has a resistance to yarn slippage of a woven fabric of 40 to 600 g/cm, preferably 100 to 500 g/cm. If it exceeds 600 g/cm, the partial breakage of the carbon fibres by a needle becomes marked, while if it is lower than 40 g/cm, the fibre yarns are liable to zigzag during the formation of the woven fabric and the form of the woven fabric becomes unstable.

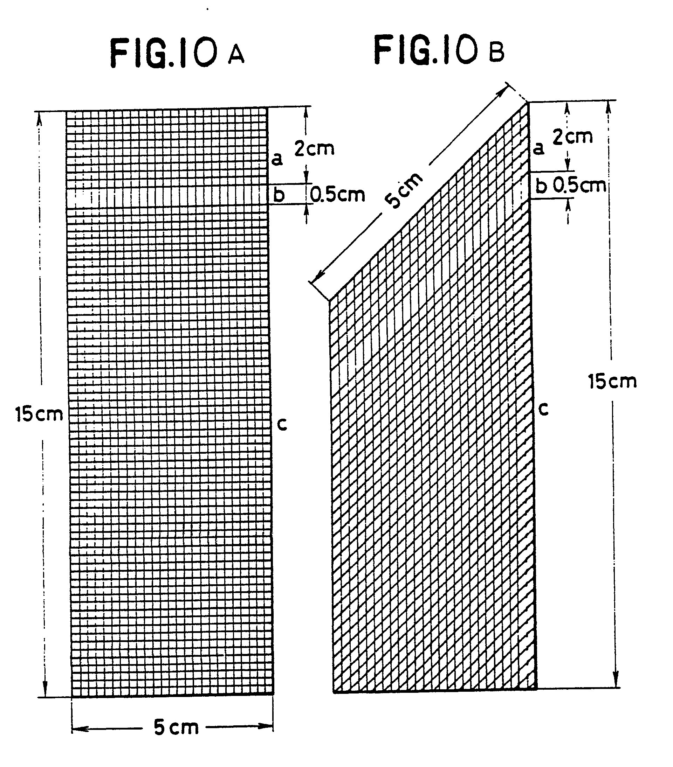

Here, the weave slide resistance of a woven fabric means a resistance measured according to the method JIS L 1079—1966. That is, as shown in Figure 10, three test pieces (5 cms along the warp and 15 cms along the weft) are cut from a fibre substrate. A transverse yarn situated at 0.5 cm interval (b) contiguous to a 2.0 cm interval (a) is removed, a comb-shaped pin specified in JIS is inserted into the bottom portion (b), the test piece is set on a tensile testing machine, the portion (c) is pulled at a constant rate of 10 cm/min, and the maximum pulling resistance of the yarn at the portion (a) is measured. The data are expressed by an average of three measurements (rounded to an integer). Also, in the case where the crossing reinforcing fibres are not at an angular relationship of 90 degrees, test pieces cut along the warp and weft as shown in Figure 10B are prepared, and the test pieces are measured according to the above-mentioned method.

When the above-mentioned weave slide resistance of a woven fabric is satisfied, it becomes possible, even in case of a fibre substrate using carbon fibres which are fragile to bend as reinforcing fibres, to stitch up by stitch yarns without partial breakage of the carbon fibres.

With regard to a needle for the introduction of the stitch yarns, one having the least possible cross-sectional area, a sharp point and a smooth surface is preferred. The use of a needle having a surface provided with zigzag barbs, a so-called felt needle, should be avoided because such a needle causes partial breakage of carbon fibres.

The reinforcing fibre material according to this invention may be placed in a metal mould after it has been converted into a prepreg by impregnation with an uncured resin or it may be placed in a metal mould and impregnated with a resin. Then, by heat curing, an excellent thick FRP having quasi-isotropic properties and being free from delamination can be obtained.

The reinforcing fibre materials of this invention are particularly useful for FRP plates which must have quasi-isotropy toward the interior of the sheet and can be substituted for duralumin, which is a conventional light metal alloy. For example, the materials are useful for skin materials of an airplane wing or H- or I-beams.

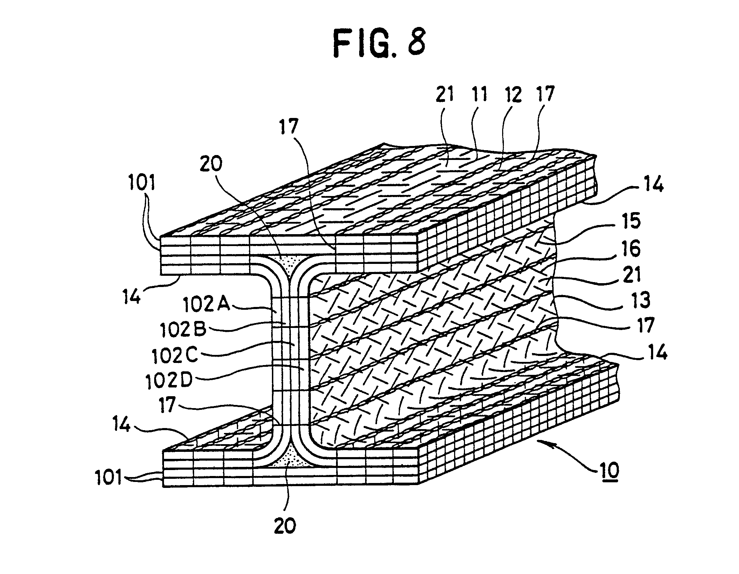

Figure 8 illustrates a moulded FRP I-beam employing a reinforcing fibre material according to the present invention. In Figure 8, an FRP I-beam 10 has a reinforcing fibre material shaped into a beam having an I cross-section and having a web 13 and flanges 14. To construct a reinforcing fibre material, it has four sheets of plain weave fabrics 102A, 102B, 102C and 102D of carbon fibres, corresponding to the above-described second fibre substrates. These four fabrics 102A, 102B, 102C and 102D are laminated at the portion of the web 13 so that warps 15 and wefts 16 are situated at angles of 45 degrees and −45 degrees, respectively, relative to the longitudinal direction of the beam 10, and integrated by stitching by stitch yarns 17 composed of glass fibre multifilament yarns. On the other hand, the fabrics 102A, 102B, 102C and 102D diverge in the flange portions 14 in opposite directions to form separate sets of the plain weave fabric 102A and 102B, and 102C and 102D. On each of the diverged surfaces are laminated two sheets of plain weave fabrics 101 of carbon fibres, corresponding to the above-described first fibre substrates so that their warps 11 and wefts 12 have angles of 0 and 90 degree, respectively, relative to the longitudinal direction of the beam 10, and are integrated with the plain weave fabrics 102A and 102B, and 102C and 102D by stitch yarns 17 composed of glass fibre multifilaments and extending in the longitudinal direction of the beam 10. Each of the spaces confined by the plain weave fabrics 102A and 102B, and 102C and 102D, and the plain weave 101 is filled with an adjusting material consisting of carbon fibres in a direction selected so that its longitudinal direction coincides with the longitudinal direction of the beam 10.

A resin 21 is infiltrated into the reinforcing fibre material thus constructed and heat-cured. Of course, in addition to a plain weave, the above-mentioned fabrics of satin weave, twill weave or non-crimp fibrous structure can be used as the fibre substrates.

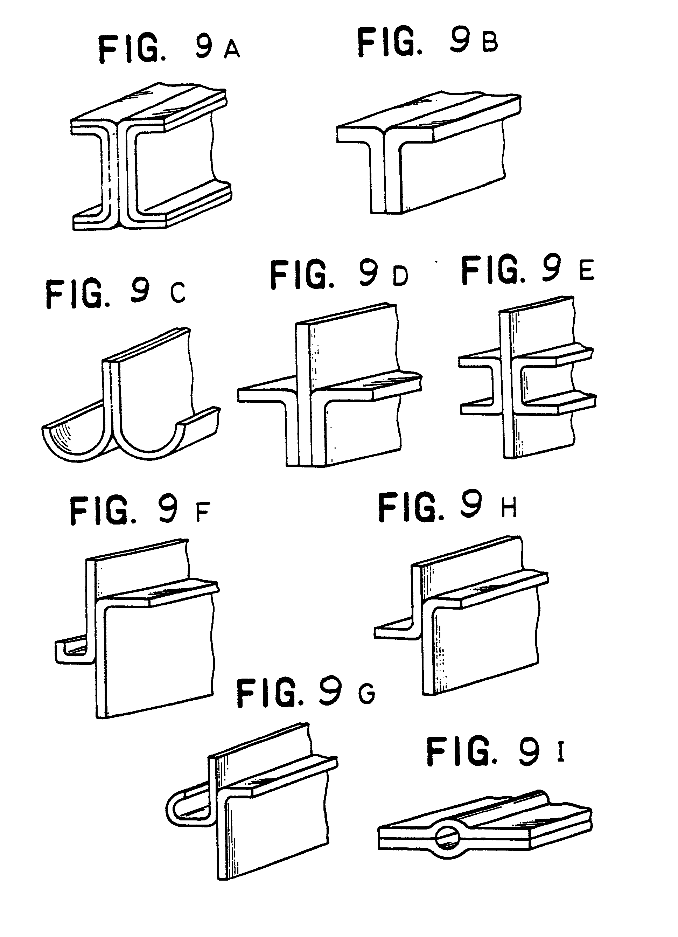

The number of laminations of fibre substrates is at least 2. By properly selecting this number of the portions to be stitched or to diverge beams having a variety of shapes, as shown in Figure 9 to 9I, can be obtained in addition to the I-beam shown in the embodiment of Figure 8. Furthermore, different types of sheet-like substrates can be laminated, for example, in an alternating manner. Further, since the substrates consist of woven fabrics, they can be laminated so that the directions of the warp and weft of the fabrics differ. For example, in the beam of the embodiment of Figure 8, the yarn direction on the outermost layer is 0 degrees relative to the longitudinal direction and the yarn direction on the two inner layers is 45 degrees. A layer in which the warp and weft directions are ±45 degree relative to the longitudinal direction of the beam can react effectively with a shearing stress produced when a longitudinal bending stress is given to the beam.

The fibre substrates need be stitched at the web portion of the beam, but not at the flange portions. Furthermore, it is also possible to form a flange portion by causing the substrates to diverge to form sets of plain weave fabrics 102A and 102B, and 102C and 102D without laminating them at the flange portion, and either stitching or not stitching each set of the plain weave fabrics. However, the lamination of a plain weave fabric 101, i.e. a fibre substrate, on the diverged surface as in Figure 8 is preferred because it is possible to give the same thickness to the web and to the flanges.

The above-described beam has high mechanical strength, particularly, interlayer shear strength and delamination strength, because there are stitch yarns also in the direction of lamination of a plurality of substrates. Moreover, the beam has an increased breaking strength because, when a crack forms on the lamination surface, the propagation of this crack is prevented by the stitch yarns in the direction of lamination.

As has been described, the reinforcing fibre materials of this invention can be given quasi-isotropic properties by laminating a plurality of fibre substrates having different directions of reinforcing fibres, and can give delamination-free, high-reliability materials for reinforcing plastics by integrating the laminate of the substrates with stitch yarns passing through in the direction of lamination.

Example 1

A plain weave fabric, warp and weft densities 5 ends/cm and 5 pitches/cm, respectively in which the reinforcing fibres extended in two directions including the longitudinal direction and a direction intersecting therewith at right angles (hereinafter referred to as woven fabric A) was obtained by using, as the reinforcing fibres, the carbon fibres "Torayca" T-300 (a product of Toray Industries, Inc., having an average monofilament diameter of 7 μ, a filament number of 3,000, a cross-sectional area of 0.11 mm², a twist number of 15 T/m, a strand strength of 330 kg/mm², a strand modulus of $23.5 \times 10^3$ kg/mm², and an elongation at break of 1.4%).

On the other hand, a bias woven fabric in which the reinforcing fibres extended in two directions having angles of ±45 degree relative to the longitudinal direction (hereinafter referred to as woven fabric B) was obtained by using the above "Torayca" T-300, making a double weave fabric of plain weave having warp and weft densities of 5 ends/cm and 5 pitches/cm, respectively, and cutting and opening this hollow or circular weave fabric helically at an angle of 45 degrees relative to the longitudinal direction.

Then, the said woven fabrics A and B were laminated alternately one by one in the same longitudinal direction to form a 10-layer laminate and secured temporarily at its edge with a tape to obtain a quasi-isotropic laminate (hereinafter referred to as a comparative laminate).

On the other hand, a quasi-isotropic laminate was obtained from the comparative laminate using, as stitch yarns, yarns prepared by giving a twist of 40 T/m to polyaramide fibre "Kevlar" —49 (having an average monofilament diameter of 12 μ, a 1420 denier, a cross-sectional area of 0.11 mm², and an elongation at break of 2.4%, this material being a product of E.I. du Pont Co. Ltd.) by single thread chain stitching along the warp direction of the woven fabric A by needling under conditions including a stitch length of 10 mm and a stitch interval of 10 mm. (This laminate is hereinafter referred to as a laminate of this invention).

Then, the above comparative laminate was cut along the warp and weft directions of the woven fabric A to form a plate (35 cm×35 cm). This plate-shaped composite laminate was set within a metal mould (inside size 35 cms×35 cms) whose periphery was sealed with silicone rubber. The metal mould was preheated to about 80°C, while it was evacuated by a vacuum pump, and an epoxy resin having a viscosity lowered to about 2 poise by heating to 80°C was intruded into the mould at a pressure of 3 kg/cm² to infiltrate the resin into the comparative laminate. Thereafter, the temperature was raised to 180°C and the resin was cured by holding it in this state for about 2 hours to obtain an FRP plate having a thickness of 2.2 mm and a reinforcing fibre of 47.1% by volume fraction (hereinafter referred to as comparative FRP). The above epoxy resin consisted of a mixture of 100 parts by weight of "Epikote" 827, an epoxy resin made by Petrochemicals Co., 90 parts by weight of Methyl Nadic Anhydride (NMA) made by the same company and 1 part by weight of 2-ethyl-4-methylimidazole (EMI) made by Shikoku Kaisei Co., Ltd. Further, an FRP plate using the laminate of this invention and having a thickness of 2.2 mm, a reinforcing fibre of 46.5% by volume fraction and a stitch yarn of 1.4% by volume fraction (hereinafter referred to as FRP of this invention) was obtained in substantially the same manner as above.

Then, the above comparative FRP was cut in a direction in which the longitudinal direction coincided with the warp direction of the woven fabric A to form a test piece having a length of 210 mm and a width of 20 mm. This test piece was subjected to a tensile test by a using a tensile testing machine, IS-5000, made by Shimadzu Corp. under conditions including a tension rate of 5 mm/min to measure a tensile break load and a tensile modulus of elasticity. The tensile break load was 1850 kg and the tensile modulus of elasticity was 4,750 kg/mm². On the other hand, with respect to the FRP of this invention, a quite similar test piece was made and subjected to a similar test. The tensile break load was 2,085 kg and the tensile modulus of elasticity was 4,700 kg/mm².

Thus, contrary to the anticipation that, since in the FRP of this invention, the stitch yarns are bent greatly because of single chain stitching and form loops on one surface of the plate, a stress is concentrated on the bent portion and a break develops from the portion in the early stage and that owing to damage to the reinforcing fibres by a needle during passing of stitches, the tensile strength becomes low, the tensile break load of the FRP of the present invention was higher by 235 kg (about 13%) though its reinforcing fibre content was lower than that of the comparative FRP, and, moreover, its tensile modulus was somewhat lower but differs little. Accordingly, it was recognized that the integrating effect of stitch yarns was excellent.

Example 2

In substantially the same manner as in Example 1 except that the total number of laminations of woven fabrics A and B was 26, there were obtained a 6.1-mm thick FRP using the comparative laminate (reinforcing fibre fraction of about 48.8% by volume, hereinafter referred to as comparative FRP) and an FRP plate using the laminate of this invention and having the same thickness (reinforcing fibre fraction of about 48.9% by volume, and a stitch yarn fraction of about 0.6% by volume, hereinafter referred to as an FRP of this invention). These plates were cut so that the longitudinal direction coincided with the warp direction of the woven fabric A to form test pieces having a length of 152 mm and a width of 102 mm.

Then, each of the above test pieces was subjected to a test for longitudinal compression by using a universal testing machine (capacity 30 ton) made by Shimadzu Corp. The compressive strength of the comparative FRP was 44 kg/mm², whereas that of the FRP of this invention was 49 kg/mm² and was higher by about 10%. This can be attributed to the fact that, in the FRP of this invention, the stitch yarns restrain a thermal strain due to the difference in coefficient of linear thermal expansion between the reinforcing fibres and the resin, a Poisson's strain difference resulting from the fact that the respective layers have different Poisson's ratios and a deformation of the plate in the direction of the thickness resulting from compression.

Furthermore, in order to check the influence of an impact upon the compressive strength, a falling weight impact having an energy of 275 kg.cm was applied to the centre of each of the above test pieces in a direction vertical to the surface and the test pieces were subjected similarly to the test. As a result, the compressive strength of the comparative FRP was 22 kg/mm², which was lower than that before the impact by 50%, whereas that of the FRP of this invention was 30 kg/mm² and the drop was as low as about 30%. This can be attributed to the fact that, in the FRP of this invention, the stitch yarns prevented propagation of the cracks produced by the impact.

Example 3

In substantially the same manner as in Example 1, there were obtained a comparative FRP using the comparative laminate and an FRP of this invention using the laminate of this invention. In each test piece, a polytetrafluoroethylene (PTFE) film of length 35 cm, width 5 cm, and thickness 100 μ which had no adhesion to the resin was inserted, before moulding, into an edge portion between the fifth fabric and the sixth fabric to give an artificial initial delamination to the edge of the plate. With respect to the FRP of this invention, stitch yarns had been removed from the part into which the film was inserted. That is, integration by stitch yarn was applied to the 35×30 cm part only.

Next, each FRP was cut so that the film-inserted portion was situated at the vertex of an isosceles triangle having a base length of 104 mm and an oblique line of 300 mm. Then, test pieces were prepared by bonding aluminium plates having the same shape and a thickness of 10 mm to both surfaces of the test pieces with an epoxy type adhesive. A pin was inserted into each of the aluminium plates at the vertex of each test piece.

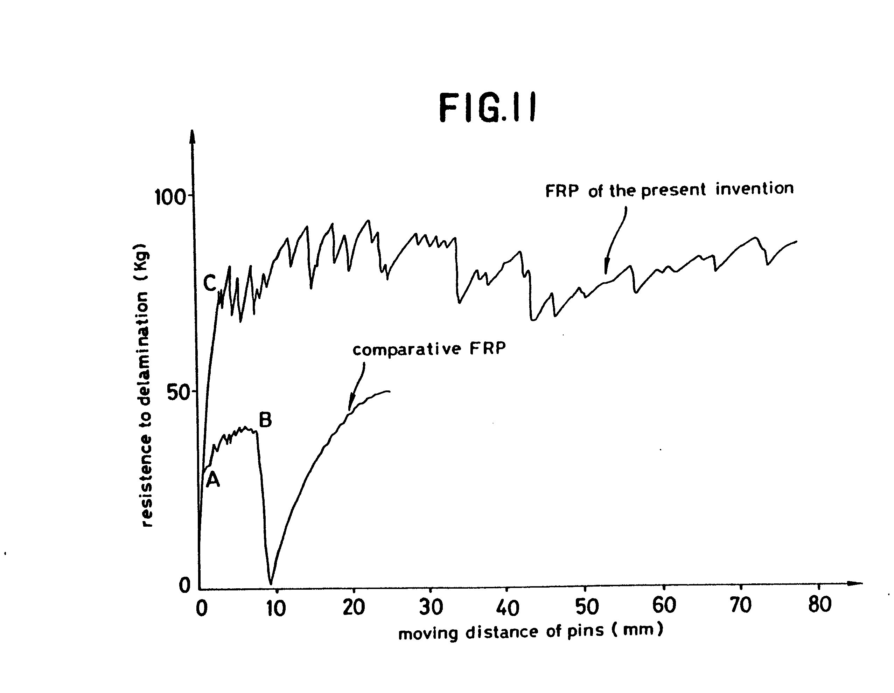

Next, the relationship between the resistance to delamination and the moving distance of the pin was determined by pulling the pin of each test piece in the vertical direction of the surface of the plate at a speed of 2.5 mm/min by use of the above-mentioned tensile testing machine. The results of this measurement are shown in Figure 11. As can be seen from Figure 11, in the comparative FRP, new delamination continuous to the initial delamination was developed between the fifth and sixth layer fabrics at a relatively low resistance as low as 30 kg (point A). This delamination was suppressed by the bonding strength of the resin for some time, but propagated at point B at stretching and the resistance became almost zero.

On the contrary, in the FRP of this invention, new delamination was produced first at point C, but its higher resistance was about 76 kg, which was 2.5 times higher than that of the comparative FRP. Furthermore, the propagation of the delamination was suppressed by the stitched portion and, unlike the comparative FRP, the delamination did not propagate at stretching. When the stitch yarns were broken, a new delamination was produced again, but similarly to the above, it was suppressed by the next stitched portion and did not propagate at stretching.

Example 4

The FRP of this invention in Example 3 to which no aluminium plate was attached was subjected to delamination by pulling the vertex in the direction vertical to the plate. Then, when the portion of broken stitch yarns was observed from the surface of the plate (from the side opposite to the surface of delamination), "Kelvar"—49 used as the stitch yarns appeared clear yellow, and the colour difference was observed between the portion of broken stitch yarns and the portion of unbroken stitch yarns. Such a phenomenon can be attributed to the fact that, in the portion of broken stitch yarns, fine cracks are formed in the resin present in the portion or surroundings and the diffused reflection of light occurs. That is, because of presence of the stitch yarns, a stress is concentrated at this portion and cracks are produced in a localized manner (if there were no stitch yarns, the cracks would occur throughout the surface). This indicates a possibility that, when the reinforcing fibre material of this invention is used, the faults developed within the interior can be found from a colour change of the stitch yarns observed from the exterior even when a CFPP which is black and whose interior is difficult to observe is used.

**Claims**

1. A fibre material for reinforcing plastics comprising at least one first fibre substrate (1) and at least one second fibre substrate (2) which are laminated in the same longitudinal direction and which are integrated by stitch yarns (7) passing repeatedly through the substrates (1, 2) in the direction of lamination of the substrates (1, 2), characterised in that the or each first fibre substrate (1) has first reinforcing fibres (3, 4) in two sets which extend in respectively the longitudinal direction and the transverse direction, the sets of first reinforcing fibres (3, 4) intersecting each other at substantially right angles, and the or each second fibre substrate (2) has second reinforcing fibres (5, 6) in two further sets which extend in two directions having angles of ±(25—65) degrees relative to the longitudinal direction, the first and second fibre substrates (1, 2) being woven fabrics, and the stitch yarns (7) having a larger elongation break than the first and second reinforcing fibres (3, 4, 5, 6).

2. A fibre material as claimed in claim 1 characterised in that the woven fabrics have a weave selected from the group consisting of a noncrimp fibrous structure, a plain weave, a twill weave, and a satin weave.

3. A fibre material as set forth in claim 1 or 2, characterised in that each woven fabric is impregnated with an uncured resin to form a prepreg.

4. A fibre material as set forth in any preceding claim, characterised in that the reinforcing fibres (5, 6) are multifilament yarns of a fibre selected from the group consisting of carbon fibre, glass fibre, polyaramide fibre, silicon carbide fibre and metal fibre.

5. A fibre material as set forth in any preceding claim characterised in that the stitch yarns (7) are selected from the group consisting of multifilament yarns of carbon fibre, glass fibre, polyaramide fibre, silicon carbide fibre and metal fibre.

6. A fibre material as set forth in any preceding claim characterised in that the stitch yarns (7) have a thermal shrinkage at 120°C of not more than 2%.

7. A fibre material as set forth in any preceding claim, characterised in that the stitch yarns (7) have a thermal shrinkage at 180°C of not more than 1%.

8. A fibre material as set forth in any preceding claim characterised in that the stitch yarns (7) have a cross-sectional area of 0.01 to 0.25 mm².

9. A fibre material as set forth in any preceding claim, characterised in that the stitch yarns (7) are composed of multifilament yarns having a twist number of 30 to 70 T/m.

**Patentansprüche**

1. Fasermaterial zum Verstärken von Kunststoffen mit mindestens einem ersten Fasersubstrat (1) und mindestens einem zweiten Fasersubstrat (2), die in derselben Längsrichtung geschichtet sind und die durch Heftgarne (7), die wiederholt in der Schichtungsrichtung der Substrate (1, 2) durch die Substrate (1, 2) hindurchgehen, zusammengefaßt werden, dadurch gekennzeichnet, daß das oder jedes erste Fasersubstrat (1) erste Verstärkungsfasern (3, 4) in zwei Gruppen aufweist, die sich in der Längsrichtung bzw. in der Querrichtung erstrecken, wobei die Gruppen der ersten Verstärkungsfasern (3, 4) einander im wesentlichen rechtwinklig kreuzen, und daß das oder jedes zweite Fasersubstrat (2) zweite Verstärkungsfasern (5, 6) in zwei weiteren Gruppen aufweist, die sich in zwei Richtungen mit Winkeln von ±(25 bis 65) Grad bezüglich der Längsrichtung erstrecken, wobei das erste und das zweite Fasersubstrat (1, 2) Gewebe sind und die Heftgarne (7) eine größere Reißdehnung haben als die ersten und die zweiten Verstärkungsfasern (3, 4, 5, 6).

2. Fasermaterial nach Anspruch 1, dadurch gekennzeichnet, daß die Gewebe eine Bindung haben, die aus der Gruppe ausgewählt ist, die aus einer ungekräuselten Faserstruktur, einer Leinwandbindung, einer Köperbindung und einer Atlasbindung besteht.

3. Fasermaterial nach Anspruch 1 oder 2, dadurch gekennzeichnet, daß jedes Gewebe mit einem ungehärteten Harz imprägniert ist, um ein Prepreg zu bilden.

4. Fasermaterial nach einem der vorhergehenden Ansprüche, dadurch gekennzeichnet, daß die Verstärkungsfasern (5, 6) Multifilgarne aus einer Faser sind, die aus der Gruppe ausgewählt ist, die aus Kohlenstoffaser, Glasfaser, Polyaramidfaser, Siliciumcarbidfaser und Metallfaser besteht.

5. Fasermaterial nach einem der vorhergehenden Ansprüche, dadurch gekennzeichnet, daß die Heftgarne (7) aus der Gruppe ausgewählt sind, die aus Multifilgarnen aus Kohlenstoffaser, Glasfaser, Polyaramidfaser, Siliciumcarbidfaser und Metallfaser besteht.

6. Fasermaterial nach einem der vorhergehenden Ansprüche, dadurch gekennzeichnet, daß die Heftgarne (7) bei 120°C eine Wärmeschrumpfung von nicht mehr als 2% zeigen.

7. Fasermaterial nach einem der vorhergehenden Ansprüche, dadurch gekennzeichnet, daß die Heftgarne (7) bei 180°C eine Wärmeschrumpfung von nicht mehr als 1% zeigen.

8. Fasermaterial nach einem der vorhergehenden Ansprüche, dadurch gekennzeichnet, daß die Heftgarne (7) eine Querschnittsfläche von 0,01 bis 0,25 mm² haben.

9. Fasermaterial nach einem der vorhergehenden Ansprüche, dadurch gekennzeichnet, daß die Heftgarne (7) aus Multifilgarnen mit einer Drehungszahl von 30 bis 70 Drehungen/m bestehen.

## Revendications

1. Matériau fibreux pour le renforcement de matériaux plastiques, comprenant au moins un premier substrat fibreux (1) et au moins un second substrat fibreux (2) qui sont laminés dans la même direction longitudinale et qui sont intégrés par des fils de couture (7) passant de façon répétitive à travers les substrats (1, 2) dans le sens de laminage des substrats (1, 2), caractérisé en ce que le ou chaque premier substrat fibreux (1) comporte des premières fibres de renforcement (3, 4) en deux jeux qui s'étendent dans, respectivement, la direction longitudinale et la direction transversale, les jeux des premières fibres de renforcement (3, 4) se coupant les unes avec les autres suivant des angles pratiquement droits, et le et chaque second substrat fibreux (2) comporte de secondes fibres de renforcement (5, 6) dans deux autres jeux qui s'étendent dans deux directions formant des angles de (±25—65) degrés par rapport à la direction longitudinale, les premier et second substrats fibreux (1, 2) étant des tissus tissés et les fils de couture (7) ayant une rupture à l'allongement supérieure à celle des première et seconde fibres de renforcement (3, 4, 5, 6).

2. Matériau fibreux selon la revendication 1, caractérisé en ce que le tissu tissé a une armure choisie dans le groupe constitué d'une structure fibreuse non-cloquée, d'une armure toile, d'une armure croisée et d'une armure satin.

3. Matériau fibreux selon la revendication 1, ou la revendication 2, caractérisé en ce que chaque tissu tissé est imprégné d'une résine non durcie afin de former une feuille pré-imprégnée.

4. Matériau fibreux selon l'une quelconque des revendications précédentes, caractérisé en ce que les fibres de renforcement (5, 6) sont des fils à multifilaments d'une fibre choisie dans le groupe constitué de la fibre de carbone, de la fibre de verre, de la fibre de polyaramide, de la fibre de carbure de silicium et de la fibre métallique.

5. Matériau fibreux selon l'une quelconque des revendications précédentes, caractérisé en ce que les fils de couture (7) sont choisis dans le groupe consitué de fils à multifilaments de la fibre de carbone, de la fibre de verre, de la fibre de polyaramide, de la fibre de carbure de silicium et de la fibre métallique.

6. Matériau fibreux selon l'une quelconque des revendications précédentes, caractérisé en ce que les fils de couture (7) ont un rétrécissement thermique à 120°C ne dépassant pas 2%.

7. Matériau fibreux selon l'une quelconque des revendications précédentes, caractérisé en ce que les fils de couture (7) ont un rétrécissement thermique à 180°C ne dépassant pas 1%.

8. Matériau fibreux selon l'une quelconque des revendications précédentes, caractérisé en ce que les fils de couture (7) ont une surface en coupe comprise entre 0,01 et 0,25 mm².

9. Matériau fibreux selon l'une quelconque des revendications précédentes, caractérisé en ce que les fils de couture (7) sont constitués de fils à multifilaments ayant un nombre de torsions compris entre 30 et 70 T/m.

FIG.1

FIG.2

# FIG.3

# FIG.4

FIG.5

FIG.6

0 073 648

FIG.7

# FIG. 8

**FIG. 9** A

**FIG. 9** B

**FIG. 9** C

**FIG. 9** D

**FIG. 9** E

**FIG. 9** F

**FIG. 9** H

**FIG. 9** G

**FIG. 9** I

# FIG.IO A    FIG.IO B

FIG.11